# EUROPEAN PATENT SPECIFICATION

(11) **EP 2 470 458 B1**
(45) Date of publication and mention of the grant of the patent: **19.11.2014**
(21) Application number: 10749773.7
(22) Date of filing: 30.08.2010
(51) Int. Cl.: B65G 1/127, E04B 1/00

(54) **AN ARRANGEMENT FOR CONDITIONING THE TEMPERATURE OF GOODS ITEMS, METHOD OF OPERATING THE ARRANGEMENT**
ANORDNUNG ZUR TEMPERIERUNG VON WARENARTIKELN, VERFAHREN FÜR DEN BETRIEB DER ANORDNUNG
ENSEMBLE POUR CONSERVER LA TEMPÉRATURE D'ARTICLES DE CONSOMMATION, PROCÉDÉ POUR FAIRE FONCTIONNER L'ENSEMBLE

(30) Priority: 28.08.2009 DK 200900973; 02.03.2010 DK 201000162
(43) Date of publication of application: 04.07.2012
(73) Proprietor: Bak, Klaus Peter, 7900 Nykøbing Mors (DK)
(72) Inventor: Bak, Klaus Peter, 7900 Nykøbing Mors (DK)
(74) Representative: Holme Patent A/S
(86) International application number: PCT/DK2010/050223
(87) International publication number: WO 2011/023200

(56) References cited:
- EP-A1- 0 263 988
- EP-A1- 0 587 244
- EP-A2- 0 035 452
- EP-A2- 1 939 561
- CH-A- 542 138
- CH-A5- 616 324
- DE-A1- 2 306 336
- DE-A1- 3 514 932
- DE-A1- 3 813 080
- DE-A1- 19 834 710
- DE-C1- 10 123 327
- FR-A1- 2 716 446
- FR-A1- 2 788 752
- FR-A1- 2 793 005
- US-A- 2 209 137
- US-A- 3 722 743
- US-A1- 2004 222 177

## Description

The invention relates to an arrangement for conditioning the temperature of goods items.

Said arrangement comprises a conditioning housing having a circumferential wall and serving for at least temporarily storing the goods items, which conditioning housing is placed in the ground and has an access opening at or above the ground level, an elevator for carrying the goods items between an upper position outside the conditioning housing and a lower position inside the conditioning housing, and a driving means for driving the elevator.

Food normally deteriorates as a result of growth of both microorganisms and action of enzymes present in the foodstuff. For each 10°C rise in temperature, the activity of microorganisms and enzymes increases by at least 2x, and it is well known that a decrease in temperature works by slowing down these changes. Also beverage is frequently cooled down for thereby enhancing enjoyment of the beverage. Liquid beverages particularly soda and beer must be discharged from the cooler at a low temperature to satisfy the demands of the typical consumer.

It is well known that the ground comprises layers having an almost constant temperature. From ancient times it is known to e.g. store food in a cave reaching the underground constant temperature layer, to store goods items such as foodstuff in a hole, and to cover or bury the goods items in the ground, or the like.

For improving the hygiene during storage of the goods items, the holes have frequently been equipped with linings of different kind as e.g. straw, bricks or a piece of pipe. The cooling holes functions completely without electricity and are therefore environment-friendly and economical to use. They are however somewhat troublesome in use since the goods items needs to be put down into the holes and manipulated up again in a cramped position while the user is down on his knees or is standing in an awkward position. Cooling is therefore today normally achieved using refrigerators for storage of both foodstuff and beverages in homes. The technology involved in keeping the foodstuff sufficiently cool, to e.g. maintain or prolonge shelves life, is expensive, and since cooling is required continuously, the technology is also energy consuming.

French patent no. FR2594422 relates to a device for storage of fresh foodstuffs or other products. This known device comprises a container equipped with compartments. The container has an upper access position, in which a user standing on a ground can insert products into the container or remove them therefrom, and a storage position below the level of the ground. This known device comprises a motorised mechanism, such as an electric winch and a carriage guided by a rail, for vertical translation of the container. This known mechanism and the container are accommodated in a leaktight, buried chamber. The device lacks a reliable follower and guideway, and a crucial problem related to the vertical translation up from and down into the chamber is that the container rolls on a sole set of vertically speaced apart wheels that act between the interior chamber wall and the exterior container wall. The container is susceptible of hitting the chamber wall during the vertical translation of said container. In particular, if the container takes a list in the chamber, e.g. due to uneven weightload because the products inside the container are not evenly distributed, the container inevitaby will skew and engage the chamber wall, thereby creating direct friction between chamber wall and container, making it very difficult to move and operate the container. Wear is induced. The container may even get stucked in the chamber, causing the motorised mechanism to overheat, malfunction and breakdown.

A storage for wine bottles according to the preamble of claim 1 is known from French patent no. FR2788752. The storage consists of a cell that receives the bottles which can be extended and retracted from a vault formed in the ground. A hydraulic cylinder or a rack and pinion drive is used to lift and lower the cell into and out of the vault. The rack and pinion drive is concealed inside co-operating telescopic poles to operate the cell up and down. Three vertically spaced apart shelves are distributed on the exteriormost pole. The use of a difficult accessible rack and pinion arrangement makes repair and maintainance difficult or even impossible. Should the rack and pinion arrangement jam the wine bottles become trapped in the ground. The bottles cannot be collected without considerable problems, complete dismantling and/or destruction of the storage. The shelves and the wine bottles blocks for maintainance access, and collection of the stored bottles on the lower shelves may even be impossible.

The above-mentioned disadvantages of the prior art cooling arrangements for conditioning goods items, such as cooling down goods items like foodstuffs and beverages, are according to the invention remedied by,
in a first aspect of the invention providing an arrangement of the type mentioned in the opening paragraph which functions without supplying electricity for the conditioning process,
in a second aspect of the invention providing an arrangement of the type mentioned in the opening paragraph which functions without contaminating the environment,
in a third aspect of the invention providing an arrangement of the type mentioned in the opening paragraph which is easy and reliable to operate,
in a fourth aspect of the invention providing an arrangement of the type mentioned in the opening paragraph which has a simple and inexpensive construction,
in a fifth aspect of the invention providing an arrangement of the type mentioned in the opening paragraph which is hygienic to use,
in a sixth aspect of the invention providing an arrangement of the type mentioned in the opening paragraph which is easy to operate, repair and maintain,
in a seventh aspect of the invention providing an arrangement of the type mentioned in the opening paragraph from which goods items can be collected in an easy and reliable manner,
in a eight aspect of the invention providing an arrangement of the type mentioned in the opening paragraph which provide for fast conditioning of goods items, and
in a ninth aspect of the invention providing an alternative solution to known arrangements of the type mentioned in the opening paragraph.

The invention is defined by the arrangement according to claim 1 and by the method according to claim 13.

One huge advantage of a paternoster elevator is that it can lift goods items up and down the conditioning housing without stopping in-between, as well as goods items can be stored and taken out of compartments, containers or shelves successively, simply by moving the endless conveyor belt or the endless conveyor chain onto which compartments, containers or shelves are secured.

Due to the thermal conductivity and diffusion caused by the temperature difference between the ground environment surrounding the arrangement and the warmer goods items in the conditioning housing heat is transferred from the inventive arrangement to the enormous surrounding environmental reservoir represented by the soil, attempting to reinstate thermal equilibrium. However, as a chain reaction the heat spreads rapidly further into the ground, resulting in that the goods items are conditioned, e.g. cooled down, inside the conditioning housing. Thus by placing the arrangement immersed in the ground it is advantageously obtained that no external energy source is required for the cooling process, and contaminating the environment is avoided. The goods items stored in the housing will adapt the same temperature as the surrounding soil without supplement of additional energy from external sources as in household refrigerators. Thus the ground constitutes an inexhaustible natural energy source, which is stable throughout the year and is easy accessible for the conditioning process, contrary to other natural energy sources such as solar heat, wind power or water power. Every domestic and commercial building having a piece of land is capable of placing the arrangement according to the invention in the ground and store relevant goods items.

Due to the paternoster elevator, that is arranged for transporting goods items up and down from the conditioning housing of the conditioning arrangement, goods items can easily be stored in - or retrieved from - the arrangement simply by operating the paternoster elevator when required. If for example the goods items are to be cooled down or otherwise conditioned the goods items is loaded on the paternoster elevator and lowered to the lower position in the ground where the temperature of the surrounding ground/soil will ensure that the temperature of the goods items are cooled or adjusted to ground temperature.

In contrast to prior art arrangements the paternoster only exposes a single or a few goods items to the operator. If the operator wants another goods item than the exposed one, he just continues to operate the paternoster elevator until the right goods item of his choice turns up. Most of the goods items are still inside the conditioning housing or is immediately returned to the conditioning housing without the temperature of any goods items being substantially affected. Thus the selective exposure of a single goods item or a few goods items from the conditioning arrangement according to the present invention constitutes an improvement that minimises temperature changes of the goods items, thus being more effective than known systems.

It must be noted that the arrangement according to the invention also can be used for keeping goods items frost-free e.g. during winter, as the temperature in the ground is maintained nearly constant.

Furthermore, the present invention provides a complete operating arrangement, which from the point of view of the operatability, can be installed in the garden, floor terrace or any other convinient location whereby food and/or beverages can be stored under appropriate cold conditions. In addition the arrangement according to the invention is not visually offensive as the arrangement is placed substantially below the ground level, or alternative protrudes e.g. above ground level just enough for the goods items to be collected when they arrive to the upper position The arrangement will therefore blend perfectly into the environment. In case of an embodiment where the arrangement protrudes above ground level, the top of the arrangement can be utilised for other purposes, such as as base for a table top, or for a barbecue grill.

Within the context of the present application the term "elevator" is used for any kind of platform, enclosure or arrangement, which can be raised and lowered vertically, as well as for any arrangement that can be operated to transport desired goods items vertically. The term "paternoster elevator" is used for an elevator that is able to orbit goods items endlessly.

Within the context of the present application the term "endless conveyor belt" or "endless conveyor chain" is a belt or a chain having its ends joined.

The paternoster elevator comprises an endless conveyor belt or an endless conveyor chain orbiting in an upright, i.e. vertical, plane around an upper roller or upper sprocket and a lower roller or a lower sprocket, and at least one shelf, container or compartment secured to the endless conveyor belt or the endless conveyor chain, which at least one shelf, container or compartment serves for supporting and storing goods items to be conditioned. The shelves may be further divided into sub-compartment or be provided with upstanding peripheral edges. The shelves may also be detachable and/or adapted for individual vertical placement along longitudinal axis of the elevator.

The upper roller or upper sprocket and the lower roller or lower sprocket advantageously serves for engaging the endless conveyor belt or the endless conveyor chain in order to drive said endless conveyor belt or endless conveyor chain. Because the shelves or containers are secured to the endless conveyor belt or the endless conveyor chain, goods items can expediently be transported up from and down into the ground in a fast an effective manner without substantial temperature changes. The endless conveyor belt or the endless conveyor chain are preferably kept stretched between the upper roller or upper sprocket and the lower roller or lower sprocket to ensure the proper orientation and position of the shelves or containers, and thus also the orientation and position of the goods items, and facilitate frictional or mechanical engagement with the upper roller or upper sprocket and the lower roller or lower sprocket in order to drive the paternoster elevator effectively and with little effort. Too much slacking of the endless conveyor belt or the endless conveyor chain may cause goods items to rest unstable and tilted on the shelves or in the containers when the paternoster elevator is not operated.

Preferably, the endless conveyor belt or the endless conveyor chain engages the topmost half of the upper sprocket or upper roller and the bottommost part of and the lower sprocket or lower roller during orbiting.

Combinations of shelves and containers are foreseen within the scope of the present invention.

In a preferred embodiment at least one shelf or containers is secured to the endless conveyor belt or the endless conveyor chain and faces away from the endless conveyor belt or endless conveyor chain in the direction towards the circumferential wall of the conditioning housing having so that the storage space of said shelf or containers can be fully exposed for loading, unloading and storage of goods items.

The at least one shelf or container may advantageously be secured to the endless conveyor belt or the endless conveyor chain at a substantially right angle, to prevent goods items from falling off a shelf or out of a container during orbiting the at least one shelf or container of the paternoster elevator.

According to the invention, the at least one shelf or container of the paternoster elevator does not extend into the gap between descending and ascending legs of the endless conveyor belt or endless conveyor chain. One of many aims of this feature is to avoid or at least minimize the risk that smaller goods items can drop into such a gap, and thereby obstruct driving of the endless conveyor belt or chain, as would be the case if the shelves or containers extended through the endless conveyor belt or endless conveyor chain, e.g. in case the shelves or containers were only secured at opposite edge points as in the prior art. Moreover, in the arrangement according to the present invention the entire area of a shelf or the volume of a container is disposable for storage of goods items.

The at least one shelf can be directly secured to the endless conveyor belt or the endless conveyor chain. The force applied for translational movement of the ascending and descending legs of the endless conveyor belt or the endless conveyor chain when rotating the rollers or sprockets so that said endless conveyor belt or said endless conveyor chain orbits provides for simultaneous movement of the at least one shelf. Thus, the at least one shelf is carried along when the endless conveyor belt orbits. Moreover, because no gap is left between the upright endless conveyor belt or endless conveyor chain and the edge at which a shelf is secured to the endless conveyor belt or endless conveyor chain, goods items cannot get trapped to jam the operation of the paternoster elevator. A further advantage is that the whole area of a shelf can be utilised for storage. If a shelf instead is provided at a distance from endless conveyor belt or endless conveyor chain the usable area for storage of goods items on said shelf would be smaller because the distance to the circumferential wall of the conditioning housing cannot be adjusted.

There may however be situations where the inventive arrangement are intended for use in conditioning very fragile goods items, such as e.g. eggs, with difficult stackable goods items, or with goods items that may not be bruised, such as e.g. apples and tomatoes. In such case careful and smooth transport may have preference over usable area, and an embodiment having at least one container that can be secured to the endless conveyor belt or the endless conveyor chain via a distance member, such as a rod, may be more preferred.

If the at least one container is pivotable secured to the distance member the opening of at least one container will always face upwards towards the ground so that stored goods items cannot fall out of the at least one container during orbiting around the upper roller or upper sprocket and the lower roller and the lower sprocket.

Although an arrangement having only one shelf or container is also intended within the scope of the present invention the most preferred paternoster elevator comprises a plurality of shelves, containers and/or compartments on the endless conveyor belt or the endless conveyor chain to be able to conditioning as many goods items as possible.

To distribute the load of goods items as much as possible the plurality of shelves and/or compartments may be evenly distributed on the endless conveyor belt or the endless conveyor chain.

Combinations of shelves directly secured to the endless conveyor belt or endless conveyor chain and compartments indirectly secured via a rod or similar means to the endless conveyor belt or endless conveyor chain are also foreseen within the scope of the present invention.

As described above a shelf protrudes from the endless conveyor belt or endless conveyor chain substantially in its entirety. Thus the at least one shelf has a first side, onto which a goods item rests during downwards transport and downwards movement of the descending leg, and a second side, onto which a goods item rests during upwards transport and upwards movement of the ascending leg. At the bottom position of the orbit of a goods item, the goods item falls off the shelf's first side to be swept along by the subsequent shelf's second side resting on said second side until said shelf reaches the upper position of the orbit, wherefrom the goods item on the shelf can be taken out of the conditioning arrangement or can proceed in a new orbit in case the exposed goods item is not the desired one. The non-desired goods remains in orbit and is conveyed by means of the orbiting endless conveyor belt or orbiting endless conveyor chain onto the first side of a shelf orbiting in front of the previously transporting shelf, whereafter the non-desired goods item proceeds to descend again.

The circumferential wall of the conditioning housing can expediently be utilised as a guide surface for goods items on the at least one shelf travelling along the descending and ascending legs of the endless conveyor belt or the endless conveyor chain. The clearance between the free edge of the at least one shelf that protrudes from the endless conveyor belt or the endless conveyor chain and the circumferential wall of the conditioning housing is selected as small as possible. On the one hand the clearance is thus sized so small that goods items do not get jammed between the free edge of a shelf and the circumferential wall of the conditioning housing. On the other hand the clearance must not be too narrow so that smooth and easy operation of the paternoster elevator and orbiting of the shelves along the circumferential wall of the conditioning housing is compromised.

Another advantage of the embodiment wherein the circumferential wall of the conditioning house is utilised as a guide surface for orbiting goods items is that the conditioning housing can be made with a small diameter thereby making the cross-sectional area to be temperature-regulated the smallest possible for goods items sized to be occupied on the shelves. In such an embodiment it may also be preferred that the shelves are secured directly to the endless conveyor belt or the endless conveyor chain.

In order to avoid that a goods item is shaken, clatters and/or rumbles along during orbiting a first side of the at least one shelf may have means for retaining a goods item on the at least one shelf during descending. If e.g. the goods item is a canned carbon dioxide beverage too much shaking will create a positive carbon dioxide pressure in the can. When the positive pressure is relieved when opening the can beverage is forced out of the can and lost. In the worst case scenario a can may explode inside the conditioning housing.

The goods item retaining means also reduces noise when operating the paternoster elevator.

In a simple and inexpensive embodiment the means for retaining a goods item on the at least one shelf is one or more taps or protrusions arranged substantially perpendicular to the at least one shelf, preferably in proximity of its free edge.

The conditioning arrangement may advantageously comprise a slide for exiting goods items. The slide can be pivoted by a shelf to thereby guide goods items out of the elevator, when hitting the slide. Simply by virtue of the slide's own weight, and the angle between the confronting shelf and the exit slide the goods items can be expedited away from the shelf onto the slide. The movement of the orbiting endless conveyor belt or endless conveyor chain can thus be used to move the shelf with the goods items of interest and temporarily stop the shelf in a tilted position that allows the desired goods item to drop off and onto the exit slide. Once the respective shelf that delivers the goods item onto the exit slide has been moved a further distance towards the upper position by means of the moving endless conveyor belt or endless conveyor chain, the exit slide and the respective shelf disengage and the slide can return to an upright position configuring the operated shelf on the paternoster elevator for returning into the conditioning housing.

The free edge of the at least one shelf may have means for actuating pivoting of the slide, to ensure a reliable pivoting. The means for actuating pivoting may e.g. be complementary shaped engagement means on slide and shelves.

In an embodiment where the slide has a turned over free end opposite a pivot end that engages a free end of a shelf, the goods items exiting the paternoster elevator is stopped and prevented from falling to the ground, thereby making the goods items easy to grasp by the consumer or other operator. Thus the combinations of features including slide engaging with free end on a shelf together with the movement of the endless conveyor belt serves to eject or expel goods items from the paternoster elevator.

The arrangement has a goods item collection trough below the lower sprocket or roller to provide space for the passing protruding shelves, as well for temporary accommodation of the goods items. The concave trough serves as an arched guide surface for goods items that drops off the first side of the shelves at the end of the descending part of the orbit in order to be swept along by the subsequent shelf in the orbit and brought along by the orbiting ascending leg towards the slide for exit.

In a preferred reliable embodiment the concavity of the goods item collection trough may have an internal outline congruent with the curve, which the free edge of a shelf sweeps during transport of goods items, so that goods items are easily swept along.

According to the invention the arrangement can furthermore comprise a roof or cover arranged for closing the access opening to the housing. The roof or cover serves advantageously to keep the temperature fixed inside the conditioning housing and prevents admission of undesired material that the wind will carry along above the access opening. If the roof or cover is in alignment with the floor, ground, terrace etc., such arrangement further has the advantages that only the roof can be seen and that stumbling edges are minimal. Alternatively it may be preferred that a part of the arrangement protrudes above ground level to prevent leaves, soil, dust, weed and similar naturally occuring component of the environment out of the conditioning housing, keeping the inside of the conditioning housing and the paternoster elevator clean and hygienic.

The roof or cover can be made of any suitable material, however it is preferred that the material can withstand persons standing or walking on the cover. This is especially important when the arrangement according to the invention is placed in terraces or in normal walking areas. The roof or cover can be designed to be used as a seat or a tabletop. The roof or cover may also be configured to provide an indication of the content of the arrangement, e.g. the cover may be given the shape of a beer-bottle cap.

Within the scope of the present invention a paternoster elevator may also be of the first kind of "elevator", thus in addition to being able to orbit in a plane being adapted to be raised and lowered vertically. Thus in an embodiment of the present invention the arrangement may comprise a means for moving the entire elevator vertically in the conditioning housing. This construction ensures that the paternoster elevator also is able to travel in a sliding translational vertical motion if required, e.g. for maintenance and repair of said paternoster elevator. If the paternoster is to be hoisted out of the conditioning housing, i.e. raised and lowered vertically, the means for moving the entire elevator vertically prevents the elevator from bumping against the circumferential wall of the conditioning housing.

The means for moving the entire elevator vertically may be one or more mainly vertically extending rails, e.g. the rails used for distancing the upper roller or upper sprocket from the lower roller or lower sprocket to keep the endless conveyor belt or endless conveyer chain stretched out.

The driving means for driving the arrangement according to the present invention may includes a handle for manually rotating the upper sprocket or upper roller to put the endless belt or the endless conveyor chain in orbit. This embodiment is inexpensive to operate and the orbiting speed can be adjusted as occasion requires.

Alternatively the driving means may include an electric motor. The electric motor may serve as a supplemental means and/or alternative means to the manual driving means or be the sole driving means. People having limited muscular strength or people that finds this solution more elegant may prefer the embodiments drived by the electric motor. An electrically driven arrangement may include means to operate the paternoster elevator from remote locations.

It is preferred that the roof or cover has a thermally insulated layer not only in order to maintain a low cooling temperature in the housing but also to minimize the effects of the environments, such as the exposure to sun light, which in some situations could have a negative impact on the cooling effect.

Alternative known means for moving the entire elevator vertically can also be used including a known guideway/ follower formed as combined telescoping pole of at least two tubes. This known telescopically arranged poles do not take up must space inside the conditioning housing leaving space for storage of goods items. This embodiment provides a convenient, reliable and easy to use mechanism when the conventional elevator, the paternoster elevator or any other vertically displaceable elevator are moved between an upper position and a lower position. The telescopic unit comprises two tubes, wherein the first tube is fixed to the housing and the second tube fixed to the elevator.

In yet another embodiment of means for moving the entire elevator vertically, said means can simply be the inner side of the wall of the conditioning housing and an air current contributing to both blowing the elevator shaft free of undesired components that may obstruct free travel of the elevator inside the conditioning housing and for centring an elevator, such as a paternoster elevator, inside the elevator shaft, i.e. the conditioning housing.

To further assist the arrangement during travel of the elevator, in particular the paternoster elevator, between an at least partly extended externalised upper position and a lower position substantially hidden inside the conditioning housing, the arrangement may comprise a supplemental or alternative driving means for driving the elevator. Preferably the driving means of this embodiment comprises a hydraulic or pneumatic unit connected to a hydraulic or pneumatic cylinder, which hydraulic or pneumatic unit functions between the conditioning housing and the elevator.

An elevator can however move vertically between an upper and a lower position by means of many convenient mechanisms, including but not limited to various scissor mechanisms with multiple linkages, a plurality of individual articulated boom members connected for successive alternate extensions and collapsing, transmission mechanisms, rack-and-pinion mechanisms, threading on a central stanchion cooperative with a complementary threading on the elevator etc. all of which can be manually operated or automatically driven by actuating a suitable power source, provided sufficient space is available inside and outside the conditioning housing. Operation may take place using a tool extending through the roof or cover, e.g. a crank handle in case the mechanism is a transmission mechanisms, rack-and-pinion mechanisms, winch or threading. Just by rotating the crank handle a few rotations the elevator can be lifted to the upper position and returned to the lower position by rotating the crank handle in the opposite direction of rotation.

In the embodiment implementing the telescopic unit a motorised pump may preferably be coupled to the telescopic unit for hoisting and lowering the elevator. Said motorised pump can comprise one or more of the hydraulic cylinder units expanding and contracting the telescopic members in a controlled manner for smooth, reliable positioning of the elevator or other work support structure. Thus, separate hydraulic cylinder units can be provided for lowering the elevator to the lower position and for locating and maintaining the elevator in the appropriate orientation in the upper position.

The arrangement according to the invention may within a preferred embodiment be operated by means of one or more pressure switches which preferably can be mounted at the ground level in order to provide a simple and comfortable operation using the the feet.

In a very simple embodiment according to the present invention not limited to use with paternoster elevators, the means for moving the entire elevator vertically may comprise at least one of a hoisting winch or a block/tackle arrangement configured so that the roof or cover accommodates a reel for winding up a hoisting rope. The hoisting or pulling rope, the tackle, may e.g pass via a roller secured to the cover inside the vertical tube to one or more pulleys, the block, secured to the lower tube for facilitating lifting of heavy load using only limited force. When more than one pulley is used the pulleys are often named sheaves.

If an arrangement according to the present invention that e.g. may be preferred for lightweight loads on the elevator, the driving means can simply be configured so that the hoisting rope is secured to the lower tube, passed through the vertical tube and winded up on a reel inside the cover or roof upon rotation of the roof. When the elevator is to be lowered again for conditioning of goods items situated at the elevator the roof or cover is simply rotated in the opposite direction to un-wind the hoisting rope.

If the arrangement comprises a goods item feeding mechanism goods items can be fed to the paternoster elevator at high rate.

The invention also relates to a method of operating the arrangement according to the present invention.

The method comprises the steps of
- loading the at least one shelf, container or compartment with goods items during orbiting the endless conveyor belt or the endless conveyor chain in an upright plane around an upper sprocket or upper roller and a lower sprocket or a lower roller,
- allowing the goods items to conditioning, and
- unloading the goods items from the at least one shelf, container or compartment by activating the driving means and orbiting the endless conveyor belt or the endless conveyor chain.

The invention also relates to a method of performing maintenance of an arrangement according to the present invention.

The method comprises the steps of
- actuating the means for moving the entire elevator vertically to hoist the paternoster elevator up from the conditioning housing, and
- actuating the means for moving the entire elevator vertically to lowering the paternoster elevator into the conditioning housing again.

Further the invention relates to the use of the above-described arrangement according for cooling canned beverages.

The invention will be explained in greater details below, giving further advantageous features and technical effects and describing exemplary embodiments with reference to the drawing in which
Fig. 1 shows an axial section of a sketch illustrating an elevator in an upper position out of a conditioning housing,
Fig. 2 shows the same in a lower position,
Fig. 3 shows an axial section of a prior art conditioning arrangement,
Fig. 4 shows an axial section of another conditioning arrangement with a first embodiment of a means for moving an entire elevator vertically according to the present invention,
Fig. 5 shows the same means for moving an entire elevator vertically as shown in fig. 4, but implemented in another conditioning arrangement,
Fig. 6 shows in a larger scale and in an axial sectional view a fragment of a principle sketch of a second embodiment of a means for moving an entire elevator vertically according to the present invention,
Fig. 7 shows an axial section of a first paternoster embodiment of the conditioning arrangement according to the invention,
Fig. 8 shows an axial section of an embodiment of the conditioning arrangement according to the invention implementing a third embodiment of a means for moving an entire elevator vertically according to the present invention,
Fig. 9 shows a perspective view of a second embodiment of a conditioning arrangement according to the invention with a paternoster elevator,
Fig. 10 shows a enlarged fragmentary perspective view of the upper end of the second embodiment where an exit slide on a paternoster elevator is in an upright position to allow the paternoster elevator to pass into a conditioning housing,
Fig. 11 shows the same with the exit slide pivoted to a goods items exit position,
Fig. 12 shows an exploded perspective view of the second embodiment of the arrangement according to the present invention with the paternoster elevator shown in figs. 9, 10 and 11 taken out of the conditioning housing and loaded with cans of beverages,
Fig. 13 shows, in a perspective view, the upper end of the second embodiment modified to include a goods item feeding mechanism occupied inside the conditioning housing substantially parallel to the orbiting plane of the endless conveyor belt,
Fig. 14 shows the same but with the goods item feeding mechanism pulled substantially vertical up from the conditioning housing,
Fig. 15 shows the same but with the goods item feeding mechanism tilted to an angular loading position in relation to the orbiting axis of the endless belt,
Fig. 16 shows the same in a subsequent step where three of the cans shown in fig. 15 has been loaded on the paternoster elevator and the fourth can is in progress of being loaded too,
Fig. 17 shows a preferred embodiment of a goods item feeding mechanism in a first feeding position, and
Fig. 18 shows the same in a second feeding position.

In the following exemplary embodiments of the conditioning arrangement according to the present invention are described in more detail.

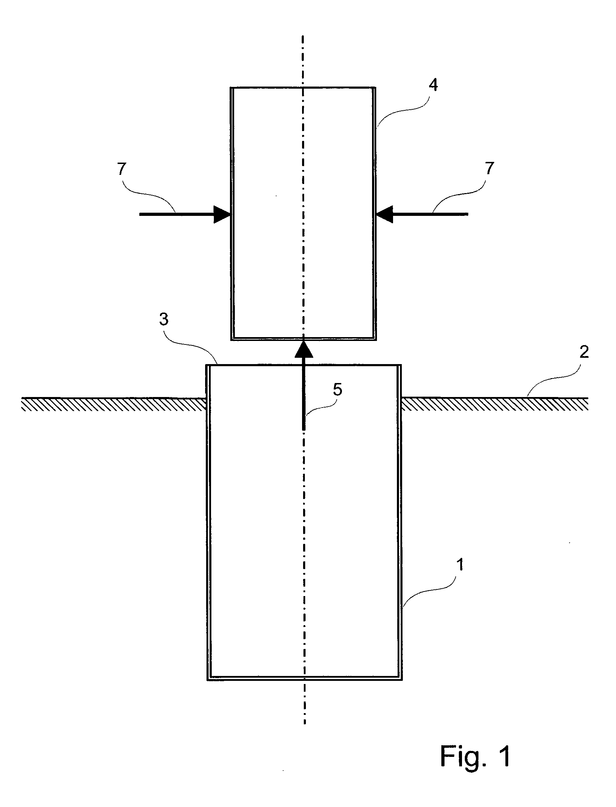

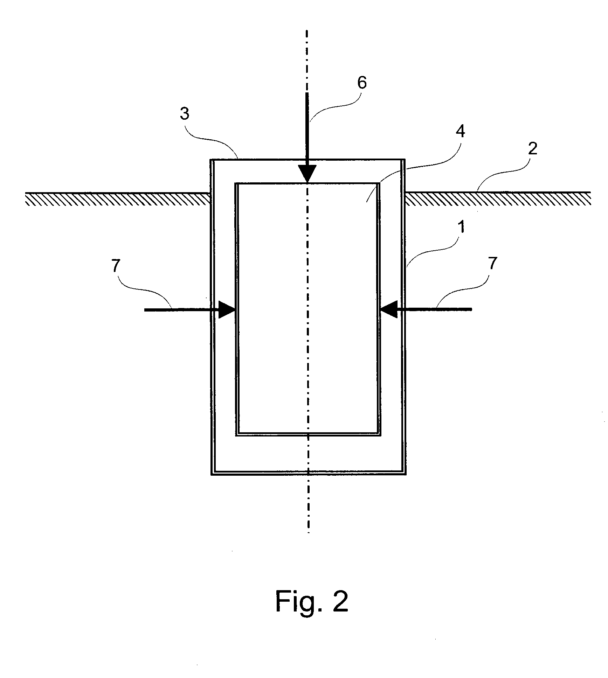

Figs. 1 and 2 generally show the basic principle for moving a goods item elevator in an arrangement for conditioning goods items, such as foodstuff and beverages.

In this basic principle sketch is shown a conditioning housing 1, such as a cooling housing in a cooling arrangement, placed in the ground 2. In the case shown an access opening 3 of the cooling housing 1 is, as a non-limiting example, illustrated situated above the ground level. The arrangement further comprises an elevator 4 for raising and lowering the desired goods items (not shown) between an upper position outside the cooling housing and a lower position inside the cooling housing.

In fig. 1 the elevator 4 is in an upper position and in fig. 2 the elevator is in a lower position.

The elevator 4 is moved between the upper position and the lower position by means of any convenient mechanism or means for moving the entire elevator vertically, in the figures indicated by the arrow 5 for the upwards movement and the arrow 6 for the downwards movement, representing the force/power necessary for the desired movement. The elevator 4 is kept in place in the housing 1 by application of force on the elevator 4, as indicated by the horizontal arrows 7.

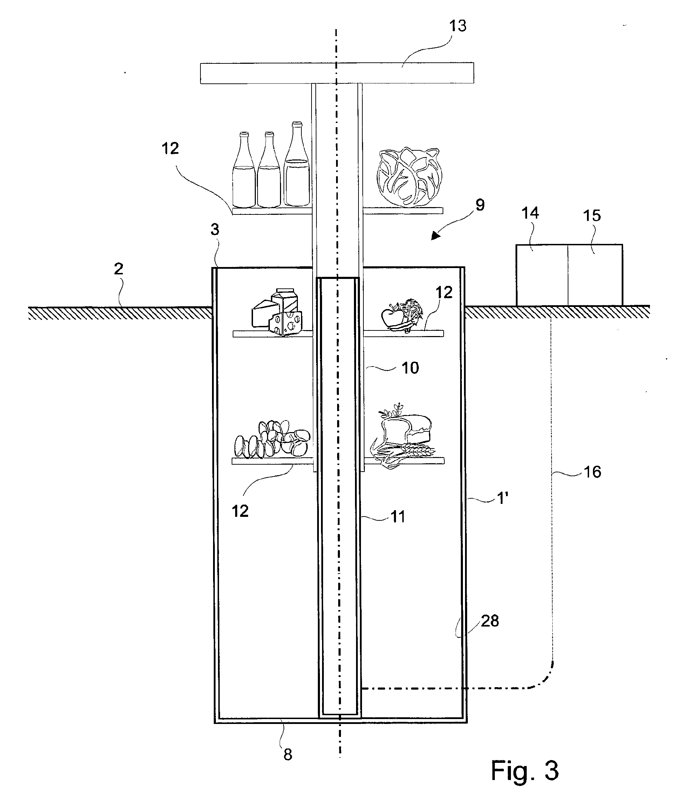

Fig. 3 shows a known cooling arrangement wherein the housing 1 consists of a pipe 1', e.g. of plastic, metal or concrete. The pipe 1' has a bottom 8 that closes the pipe 1' at the bottom to ensure that the cooling housing is kept free from e.g. the surrounding soil into which the pipe 1 is immersed. The elevator 9 consists of a vertical tube 10 slidingly mounted on a lower tube 11. Together the vertical tube 10 and the lower tube 11 constitute a telescopic unit enabling the elevator 9 to travel between the upper and lower position. The telescopically arranged tubes 10,11 also serve for axially centring the elevator 9 in relation to the pipe 1' so that the elevator 9 during travel always describes a translational movement in an attempt to void harmful bumping against the wall of the pipe 1'. The elevator 9 is equipped with three shelves 12 for supporting the goods items to be cooled and a cover 13 for covering the access opening 3 of the pipe 1' in the closed position of the elevator 9. As the arrangement basically is placed below the ground level the arrangement will blend into the environment, and can therefor easily be installed in e.g. the garden, floor terrace or any other convinient location where the user requires food and/or beverages to be kept under cold and/or constant temperature conditions. In fig. 3 the elevator is in a position between its upper and lower position.

Provision of a means for moving the entire elevator vertically is contemplated by the telescope unit 10,11 acting as a hydraulic or pneumatic cylinder 10,11, which by means of a power aggregate 14 can be supplied with a pressure fluid from a fluid source 15 via a conduit 16. The power aggregate 14 consists of a pump, (not shown) powered by a motor, (not shown), which may be electrically or manually operated. In the shown embodiment the power aggregate 14 and fluid source 15 is placed above the ground level but could just as easily be placed below ground level or be an integrated part of the conditioning arrangement. For example a gas cartridge can be situated in the ground. This embodiment of a means for moving the entire elevator vertically can be implemented in most conditioning arrangements and needs not be arranged centrally, but can also be arranged alongside the circumferential wall of the condition housing.

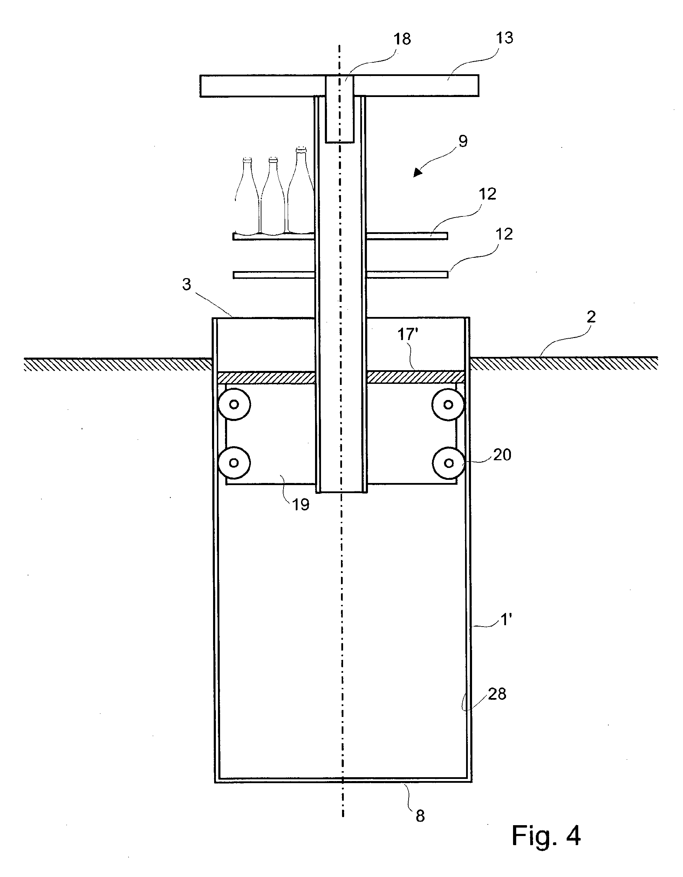

Fig. 4 shows a first embodiment of a means for moving the entire elevator vertically in a conditioning arrangement. The construction of the conditioning arrangement corresponds basically to the one shown in fig. 3 and same reference numbers are therefore used for like parts. The pipe 1' forms together with a piston 17 attached to the elevator 9 a relatively large pneumatic cylinder 17'. A pump 18 placed e.g. in the top of the elevator 9 serves for supplying the pneumatic cylinder 17' with pressurized air.

A carrier 19 is mounted on the underside of the piston 17 facing towards the bottom 8 of the pipe 1'. The carrier 19 comprises several sets of wheels 20 capable of driving axially on the inner side of the pipe 1', thereby axially centring the elevator 9 in relation to the pipe 1' to allow a smooth elevating and lowering of the shelves 12 when the arrangement is operated. Thus the first embodiment of a means for moving the entire elevator vertically always keeps the elevator centred in the conditioning housing and enables a smooth and easy hoisting of goods items. A packing ring (not shown) may be mounted on the periphery of the piston 17 for tightening the piston 17 against the inner side 28 of the pipe 1'.

In an alternative embodiment of the first embodiment of a means for moving the entire elevator vertically, rails (not shown) may be mounted inside the pipe 1' for supporting the wheels 20 of the carrier 19. The piston 17 has a relatively large piston area corresponding substantially to the cross-sectional area of the pipe 1' into which the piston reciprocates. The pneumatic cylinder 17' therefore needs only little air pressure for being activated. Modifications and changes in this respect will be known for a person skilled in the art based on the enclosed description. According to the invention is used a high-pressure pump 18 for supplying the pneumatic cylinder 17' with high-pressure air. The high-pressure air inevitable expands and arrives at the pneumatic cylinder 17' at a lower pressure thereby advantageously contributes for generating the required useful refrigerating process for the cooling arrangement according to the invention.

Another advantage consists in that a high-pressure air pump only takes up very little space and therefore is easy to place in the cooling arrangement. The high-pressure pump may be electrically or manually operated.

The elevator 9 may be equipped with means such as a lock (not shown) for temporarily keeping the elevator in its upper position. Such means are well known by the person skilled in the art.

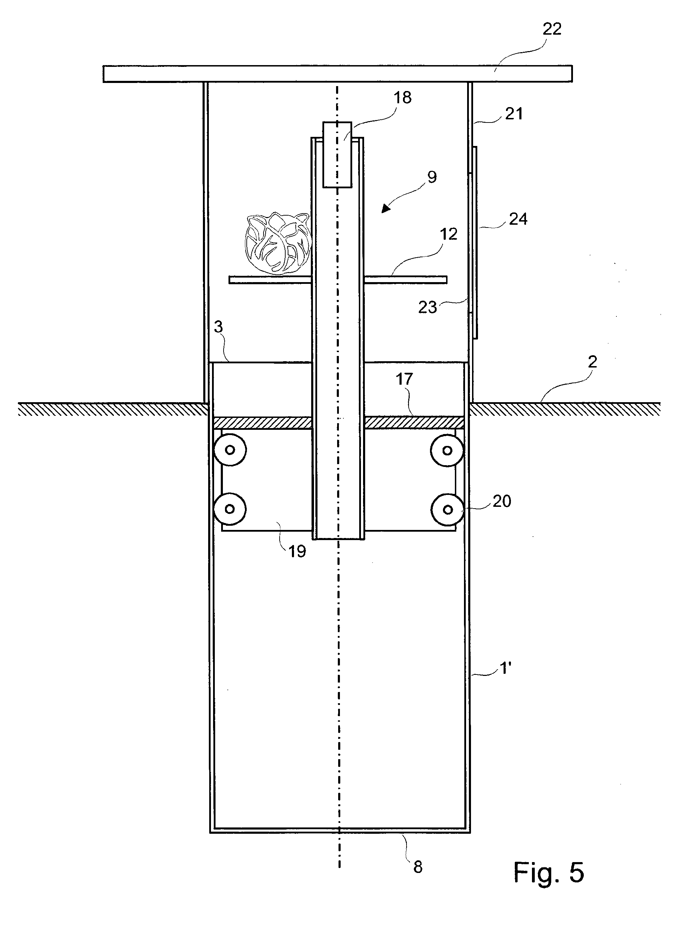

Fig. 5 shows yet another embodiment of a cooling arrangement with the first or the alternative first embodiment of the means for moving the entire elevator vertically. This embodiment corresponds to the embodiment shown in fig. 4 and same reference numbers are used for like parts. A casing 21 containing the elevator 9 in the upper position is in this case placed above the housing 1'. A cover 22 covers the top of the casing 21. The wall of the casing 21 has an access opening 23, which can be closed by means of a door 24 or similar closure means, including a plug means.

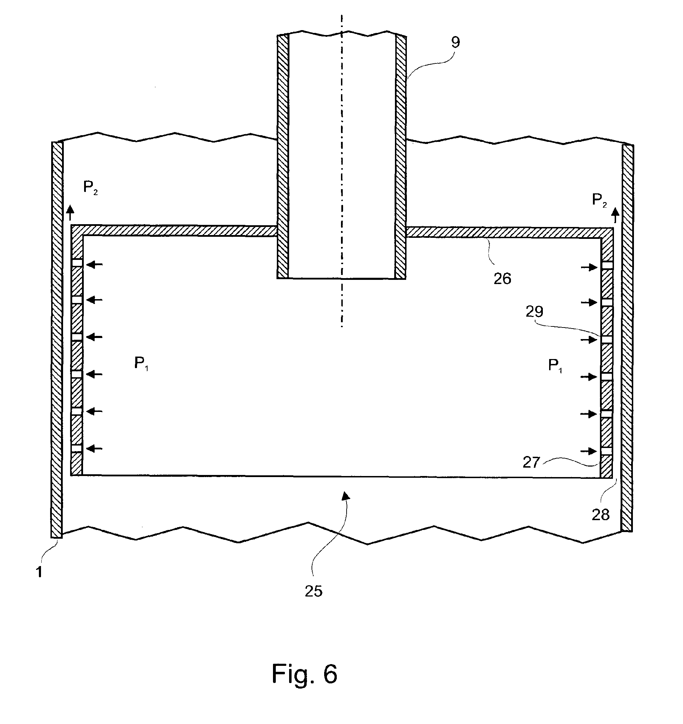

Fig. 6 shows a fragment of an axial section of a further embodiment of a cooling arrangement with a second embodiment of a means for moving the entire elevator vertically. This embodiment corresponds to the embodiment shown in fig. 5 with or without the carrier 19 with the wheels 20. The piston 25 is in this case formed like an inverted container, which has a bottom 26 with a downwards-turning mantle 27 in contact with or close to the inner side 28 of the pipe 1'. A number of through holes 29 are formed in the mantle 27.

Using the orientation of fig. 6 pressure air, shown with the horizontal arrows P₁ having a relatively small positive pressure during operation is, via a number of through holes 29, ejected against the inner side 28 of the pipe 1' whereby an air curtain is formed between the pipe 1' and the mantle 29 and thereby also between the pipe 1' and the elevator 9.

This air curtain serves advantageously for axially centring the elevator in relation to the pipe so that the elevator 9 during travelling always describes a translational movement. In fig. 6 is seen only two vertically rows of through holes 29. Any suitable number of rows or arrays (not shown) of through holes may however be distributed along the mantle.

Using the orientation of fig. 6, as shown with the vertical arrows P₂ some pressure air is ejected upwards from the space between the circumferential wall of the mantle and the pipe. This pressure air serves advantageously for keeping the cooling arrangement clean by blowing any debris away.

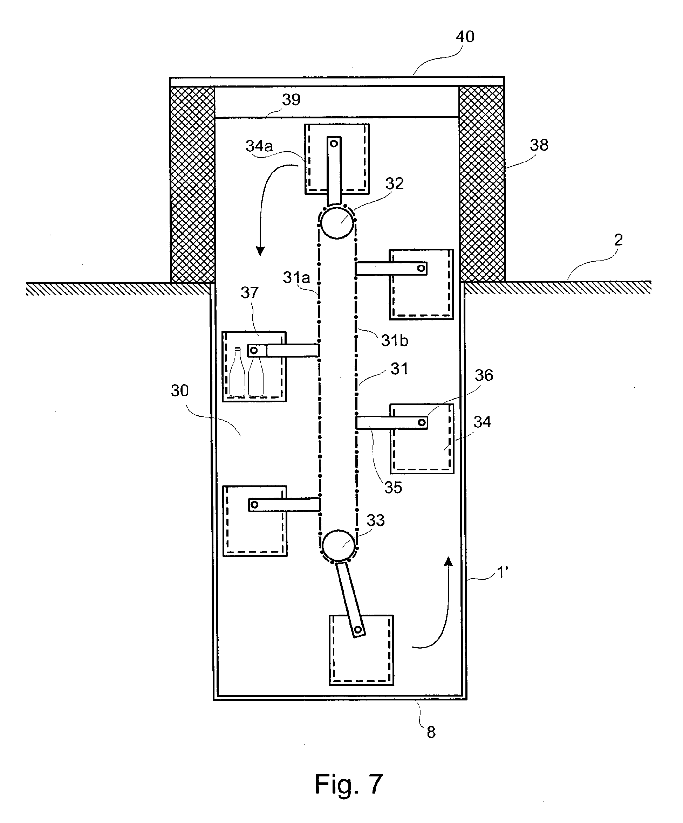

Fig. 7 shows a variant of the embodiments shown in fig. 2 - 6. The elevator corresponds in this case to a paternoster elevator 30 extending from above the ground or in proximity to ground level down to close to the bottom 8 of the pipe 1'.

The paternoster elevator 30 comprises an endless conveyor chain 31, having a descending leg 31a and an ascending leg 31b, moving around an upper and lower sprocket 32 and 33, respectively, during operation. A number of containers 34 or shelves are by means of rods or arms 35 mounted on the endless conveyor chain 31. In respect of the present invention it must be understood that the endless conveyor chain 31 could be any other suitable means for transporting the containers such as an endless conveyor belt.

The desired goods items, such as for example bear cans, are placed in the container 34a when the container 34a is in the top position.

The paternoster elevator 30 successively moves the container 34a, that is secured to the descending leg 31a, with the goods items, down towards a bottom position from which said container successively is moved up again to the top position as shown with curved arrows, due to the descending leg 31a now turns into being the ascending leg 31b. At said top position the goods items, which has been cooled down during the passage or an elapsed cooling period, can be removed from the container 34a, and new goods items can be placed in the container 34a. Since the movement of the elevator 30 is continuously the cooling or other conditioning process is extremely simple and effective.

The containers 34 are rotatable mounted on axle journals 36 on the rods or arms 35. The axle journals 36 are placed above the centre of gravity of a filled container for thereby securing that the containers always are oriented with their top openings 37 facing upwards.

A thermally insulated layer 38 is placed on the arrangement not only in order to maintain the required low temperature in the housing but also to minimize the effects of the environments, such as the exposure to sunlight, which in some situations could have a negative impact on the cooling effect. It must be understood that an insulating layer can be placed on any convenient place of the arrangement or in the proximity to said arrangement, as long as the layer provides the desired effect of keeping the goods items placed in the arrangement cold and/or frost-free. As cold air is denser than warmer air, the cold air in the arrangement according to the invention will tend to stay in the housing and the elevator contributing to keeping the desired temperature conditions in the arrangement.

All disclosed embodiments can function as e.g. a table or a chair when the elevator is in the upper position using the roof or cover as the seat or tabletop. In this respect the upper position of the elevator preferably places the roof or cover at an ergonomically position above the ground.

In order to ensure that debris, soil or other contaminates falls down to the open top 39 of the pipe 1', a cover 40 is placed above said opening. Said cover can, as described above, also be used as a tabletop.

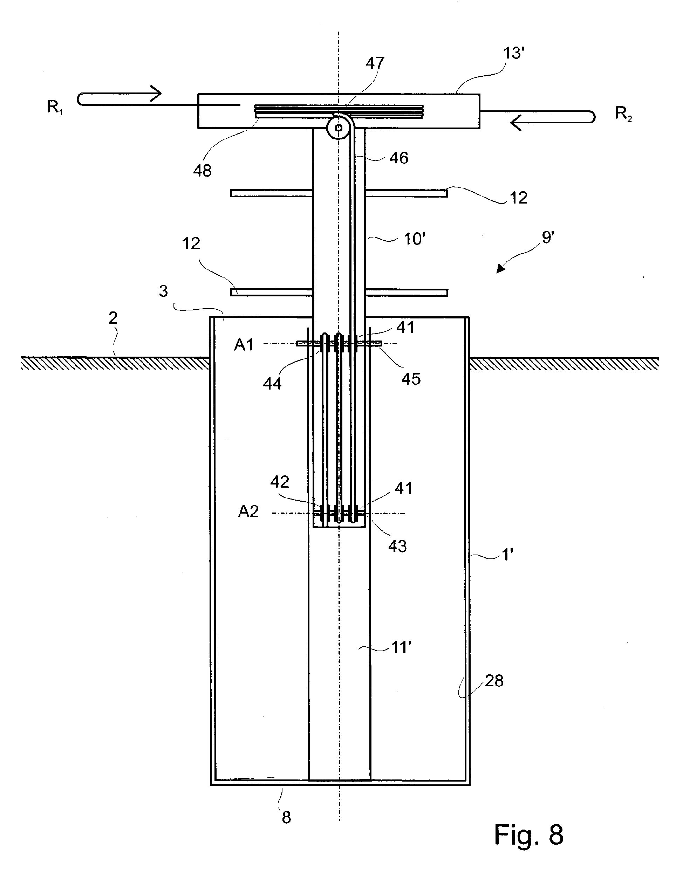

Fig. 8 shows an axial section of an embodiment of a conditioning arrangement according to the invention implementing a third embodiment of a means for moving an entire elevator vertically according to the present invention. The cooling arrangement according to this embodiment of the invention have a vertical tube 10' telescopically reciprocating inside a lower tube 11' contrary to the vice versa arrangement of the embodiment shown in fig. 3 where the lower tube 11' reciprocates inside the vertical tube 10'. Same reference numbers are however used for same parts.

The embodiment shown in fig. 8 relies on the block and tackle principle to hoist the elevator. A block and tackle 41 is a simple but highly effective lifting device. In the case shown a block has three sheaves but any suitable number of sheaves can be selected in so far as the amount of friction in the pulley shafts does not begin to become a significant source of resistance. The sheaves work by changing the direction of the force applied to hoisting rope used with the sheaves. Thus when two or more sheaves are combined in the block their mechanical advantage is increased to yield a substantial mechanical advantage. This advantage will be known to the person skilled in the art.

In the present embodiment a first set 42 of three sheaves 41 constitutes a first block 42 mounted inside the free telescopic end of the vertical tube 10' facing opposite the cover 13'. The three sheaves 41 are mounted inside the vertical tube 10' by means of a common strong first pin 43 serving as a first axis A1 for the first set of three sheaves 41.

A second set 44 of three sheaves 41 constitutes a second block 44 mounted inside the telescopic upper end of the lower tube 11' facing towards the vertical tube 10'. The three sheaves 41 are mounted inside the lower tube 11' by means of a common strong second pin 45 serving as a second axis A2 for the second set 44 of three sheaves 41.

One end of the tackle 46, i.e. the hoisting rope 46, is fixed to the first block 42 and passed over the first set 42 of sheaves 41 via an appropriate number of windings. The hoisting rope 46 extends towards the cover 13' via a roller 47 arranged either inside the end of the vertical tube 10' closest to the cover 13' or a roller arranged in or at the cover to be winded on a reel 48 arranged for example inside the cover, as shown in fig. 8. Because the reel 48 can be operated by rotation of the cover 13', as indicated by the arrows R₁, R₂, the elevator 9' will automatically hoist when the cover 13' is rotated to be removed from the conditioning housing 1'. A servo system (not shown) can be implemented in the arrangement in order to reduce amount of force when rotating the cover 13'. Accordingly, the servo system expediently assists any operator to unburdened use of the cooling arrangement, irrespective of the physics of the operator. The power assisted servo steering system may use pressurized fluid or electricity as the power source.

The reel 48 could be arranged anywhere accessible for the operator.

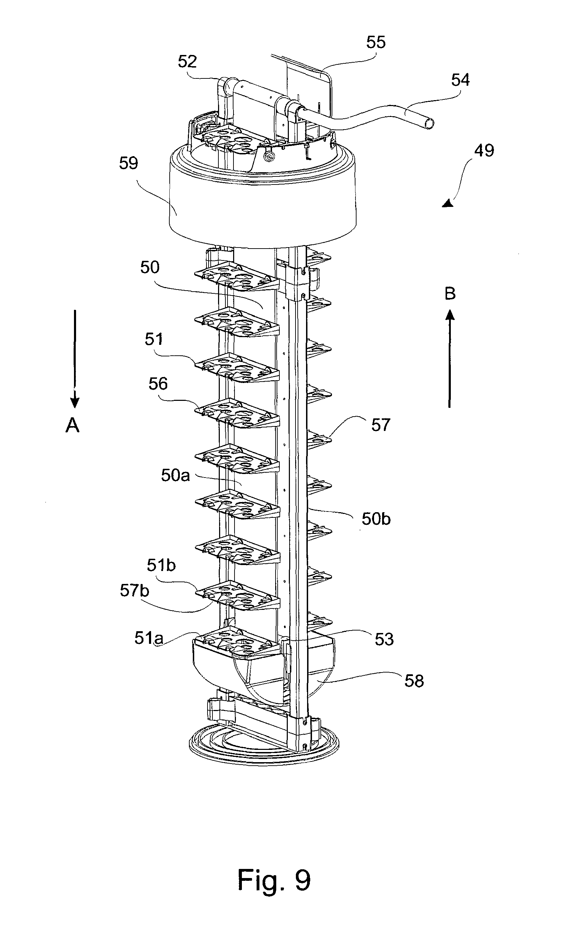

Fig. 9 shows in perspective another design of a paternoster elevator 49 according to a second embodiment of a conditioning arrangement according to the invention.

An endless conveyor belt 50 provided with a plurality of spaced apart shelves 51 to be moved in orbit around an upper roller 52 and a lower roller 53 by means of a handle 54 operatively connected to at least the upper roller 52, serves to deliver goods items (not shown) stored at the shelves 51 to the consumer via exit slide 55.

The shelves 51 protrude from the endless conveyor belt 50, whereto they are secured e.g. by means of screws (not shown). The shelves 51 are spaced apart at a distance sufficient for accommodating the goods items. If e.g. the conditioning arrangement is configured for cooling beverages, such as beer cans, the suitable distance between two adjacent shelves is at least the diameter of a beer can.

Each shelf 51 has a first side 56, onto which the goods items can rest during downwards transport on the descending leg 50a towards a bottom position, as indicated by the arrow A, and a second side 57, onto which the goods items can rest during upwards transport on the ascending leg 50b to an upper position, as indicated by the arrow B, where the goods items can be taken out of the conditioning arrangement.

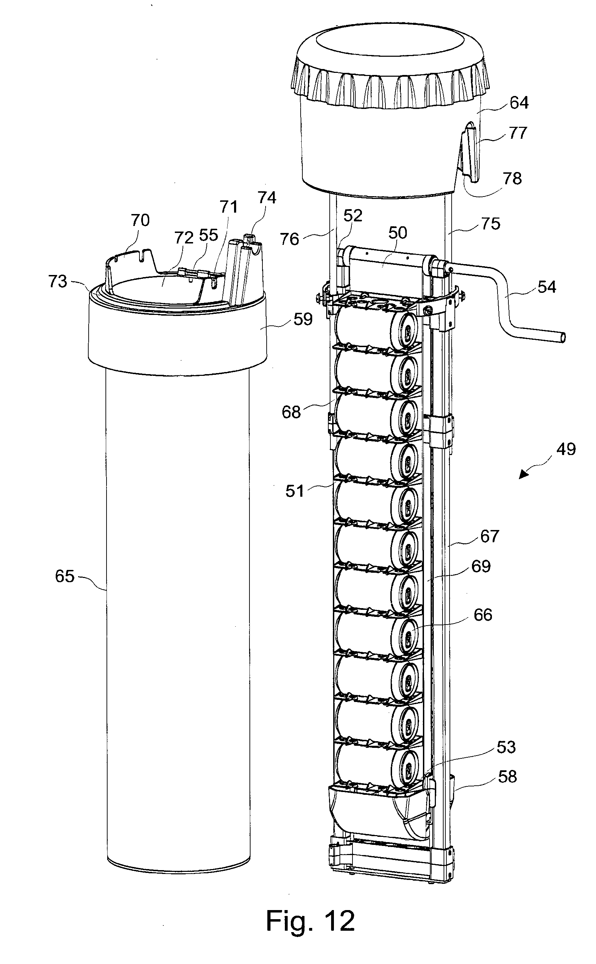

Thus the paternoster elevator 49 successively circulates and orbits the shelves 51 with the goods items resting on them along a path defined by the movement of the endless conveyor belt. In the lowermost position of a shelf, i.e. when a shelf 51a passes the lower roller 53, the goods item on it drops off and falls into a U-shaped trough 58. The dropped goods item is then sweeped along with the next shelf 51b on the endless conveyor belt 50 arriving at the trough 58. The second side 57 catches the dropped goods item and lifts it towards the upper position. In summary when a goods item is moved downwards it rests on the first side of a shelf and when the goods items subsequently is moved upwards it rests on the second side of the shelf coming just behind the shelf having the first side upon which the goods item in question rested before it was dropped into the trough. An annular flange 59 serves for sealing between the elevator 49 and the conditioning housing, as will be explained later with reference to fig. 12.

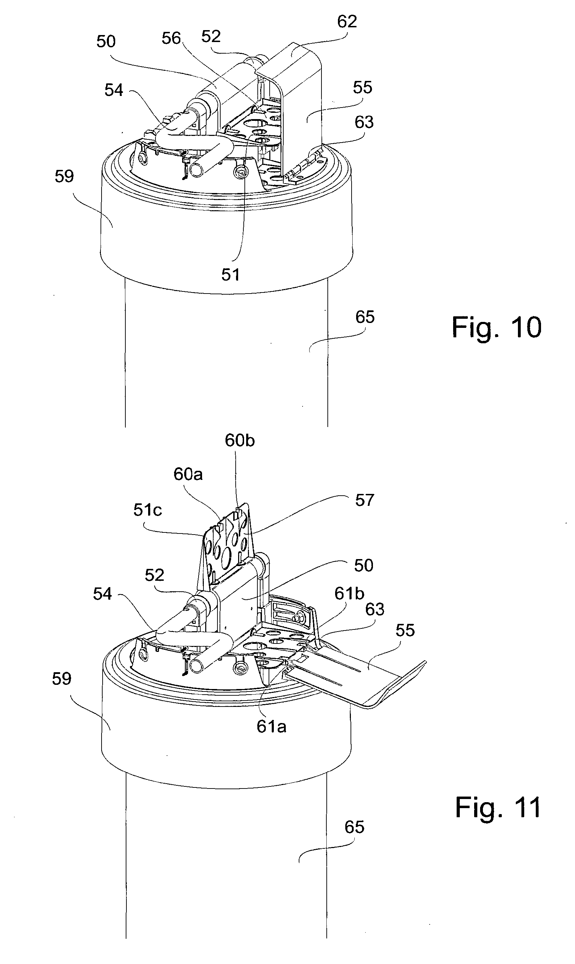

As seen more clearly in the enlarged fragmentary views of the upper end of the paternoster elevator 49 shown in figs. 10 and 11, the shelves 51 are expediently utilized for actuating the exit slide 55 that is mounted on the annular flange 59 to pivot and assume a suitable goods items receiving position, e.g. a position where a beer can is able to exit the shelf onto which it arrives to the upper position and rolls onto the pivoted slide 55 by itself.

For this actuation purpose a free edge of the shelves has means for actuating pivoting of the slide. In the embodiment shown these means are two depressions or indents 60a,60b that engage corresponding hooks 61a,61b on the slide 55, which hooks 61a,61b are arranged protruding from the pivotable end 63 of the slide 55 opposite a turned over free end 62.

Other means configured for enabling a shelf to engage or mate the slide 55 in order to actuate the slide 55 to pivot is foreseen within the scope of the present invention. It is to be understood that such means of course disengages or decouples once the engaging shelf is moved further on by means of the endless conveyor belt, e.g. towards the upright position of the shelf 51 at the topmost position. Once shelf and slide have disengaged, the slide automatically returns to the upright position shown in fig. 10 in order to allow the shelf 51 on the paternoster elevator 49's endless conveyor belt 50 to return to the conditioning housing for a while until next use, or continue to orbit if further goods items are to be collected from the paternoster elevator 49.

The present paternoster elevator 49 is shown in figs. 9, 10 and 11 without cover and conditioning housing to better illustrate the securing of the shelves on the endless conveyor belt.

In the exploded, perspective view of the second embodiment of an arrangement according to the present invention seen in fig. 12, a cover 64 and a conditioning housing 65 is shown together with the paternoster elevator 49, which is loaded with cans 66 on the first sides 51a of the shelves 51. Vertical opposite rails 67,68 provide the axial distance between the upper roller 52 and the lower roller 53, which rollers 52,53 are mounted opposite each other at the respective opposite ends of said rails 67,68. The endless conveyor belt 50 is orbited around the rollers 52,53 by actuation of the handle 54. Thus the rollers 52,53 are simply rotated to move the endless conveyor belt 50 into orbit. Since the shelves 51 are mounted protruding in their entirety from said endless conveyor belt 50 no parts of the shelves extends into the gap 69 between the descending leg 50a and the descending ascending leg 50b of the endless conveyor belt 50. Accordingly, when a shelf reaches its lowest position at the trough 58 the movement of said lowest shelf follows the movement of the endless conveyor belt 50 and is turned through an angle of 180°. The length of the rails defines the distance between the rollers 52,53 and keeps the endless conveyor belt 50 stretched.

The conditioning housing 65 has an upper end carrying the annular flange 59 that serves to seal between the paternoster elevator 49 and the conditioning housing 65. The annular flange 59 has two protruding coupling webs 70,71 to engage complementarily shaped means (not shown) on the cover 64 when said cover closes the internal diameter 72 of the conditioning housing 65, and thus closes the entire conditioning arrangement. The exit slide 55 is mounted to an annular rim 73 of the annular flange 59. The handle 54 is operatively journaled in a journal bearing 74 that protrudes upright from the annular rim 73 when the paternoster elevator 49 is assembled with the conditioning housing 65.

The cover 64 is situated to be axially displacable along the rails 67,68 by means of legs or rods 75,76 protruding from the cover 64 and is slidably arranged in relation to the rails 67,68 to lower and raise the cover to get access to the goods items, i.e. the cans 66, loaded on the paternoster elevator 49. The cover 64 can be raised and lowered manually just by pulling or pushing the cover vertically. The cover 64 may be given any suitable design. In the present case the cover 64 is designed as a bottle cap with a circumferential skirt 77 suited to surround the annular flange when the cover is lowered to close the internal diameter 72 of the conditioning housing 65 accommodating the paternoster elevator 49. The skirt 77 has a cut-out section 78 fitting above the journal bearing 74 to provide space for the handle and for operating the handle. The handle 51 may be detachable secured to the upper roller 52 so that no parts or components protrudes radially beyond the diameter of the cover 64 when said cover 64 is in its lowest position or close to its lowest position.

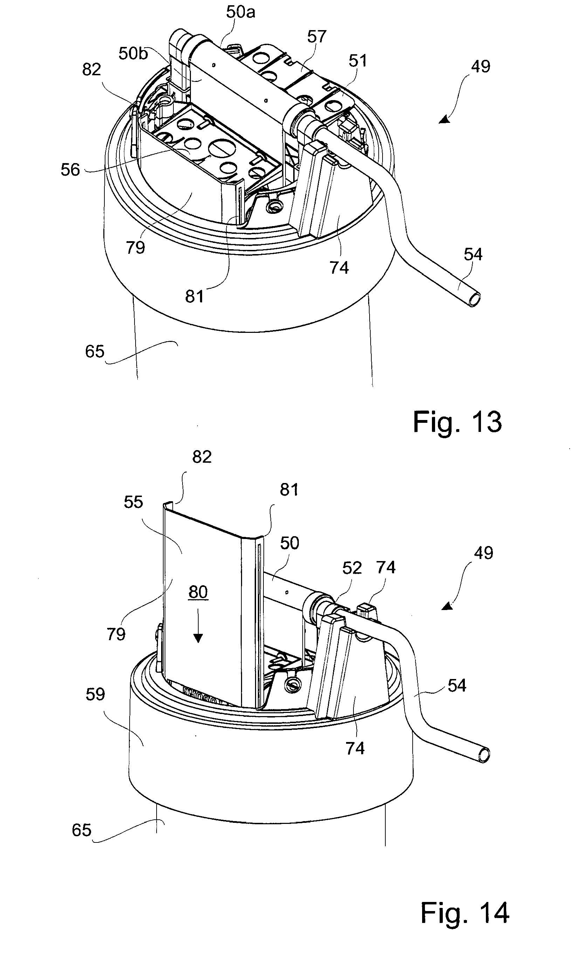

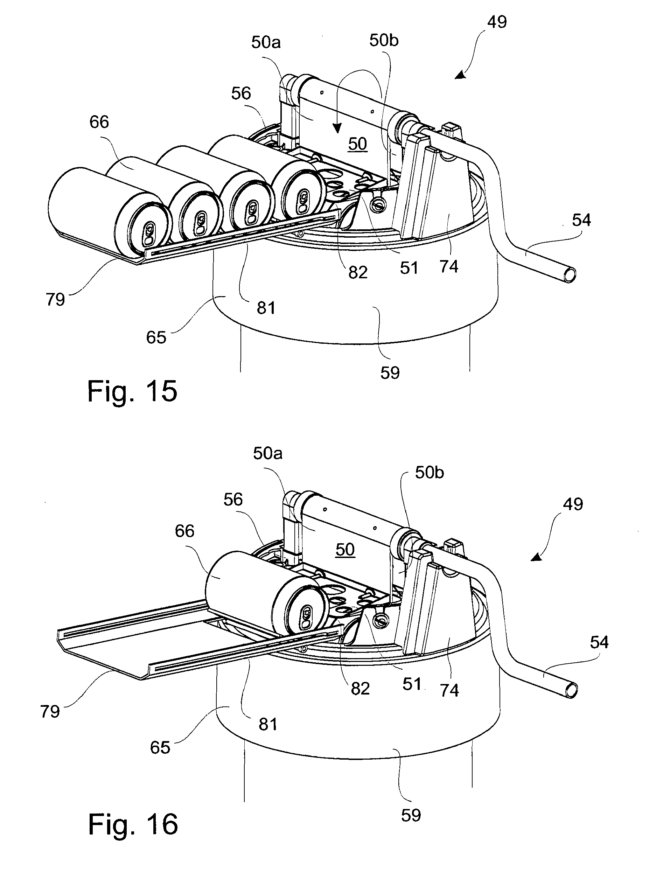

Fig. 13 illustrates a fragmentary perspective view of the paternoster elevator 49 provided with a goods item feeding mechanism 79 in the form or a pivotable and vertically displaceable plate 80 with upright opposite lateral edges 81,82 that serves to guide the fed goods items onto the plate 80. In the situation shown in fig. 13 the goods item feeding mechanism 79 is vertically displaced into the conditioning housing parallel to the paternoster elevator when the conditioning arrangement not is operated. Only a small part of the plate 80 is visible in fig. 13. Suspension means such as e.g. guide rails 87,88 provided in the lateral edges 81,82 of the plate 80 and cooperating engaging notches, pins or tabs (not shown) e.g. on the conditioning housing 65 facilitate the displacement of the feeding mechanism 79 to the positions seen in e.g. figs. 14 and 15, including other tilted intermediate positions. Other suspension means that provide the same functionality can substitutes the exemplary means shown in the figures.

In the situation shown in fig. 14 the plate 80 is pulled vertically up from the conditioning housing and pivoted to the pivoted position seen in fig. 15 where the plate 80 has been loaded with four cans 66. The plate 80 is pivoted so that the feeding angle is less than 90° so that the cans rolls or slides towards the orbiting shelves 51 of the paternoster elevator 49 simply by virtue of their own weight and the gravity.

As seen in fig. 16 a shelf is sized to pass between the upright opposite lateral edges 81,82 of the plate 80 so that the free edge of an orbiting shelf 51 arriving from above the plate 80 can hit a tilting plate 83, pivotably suspended to the plate 80, arranged between the upright opposite lateral edges 81,82 of the plate 80. When the second side 57 of a shelf 51 hits a confronting edge 84 of the tilting plate 83 the feeding angle is reduced, and the can 66 drops directly onto said shelf 51. The tilting plate 83 and the shelf 51 that hits it immediately disengage or move apart once the shelf 51 continues into orbit, because the tilting plate 83 is pivotably suspended to the plate 80. The tilting plate 83 reassumes its original feeding angle to allow the next can to rest on it until the next shelf arrives, and the same procedure is repeated.

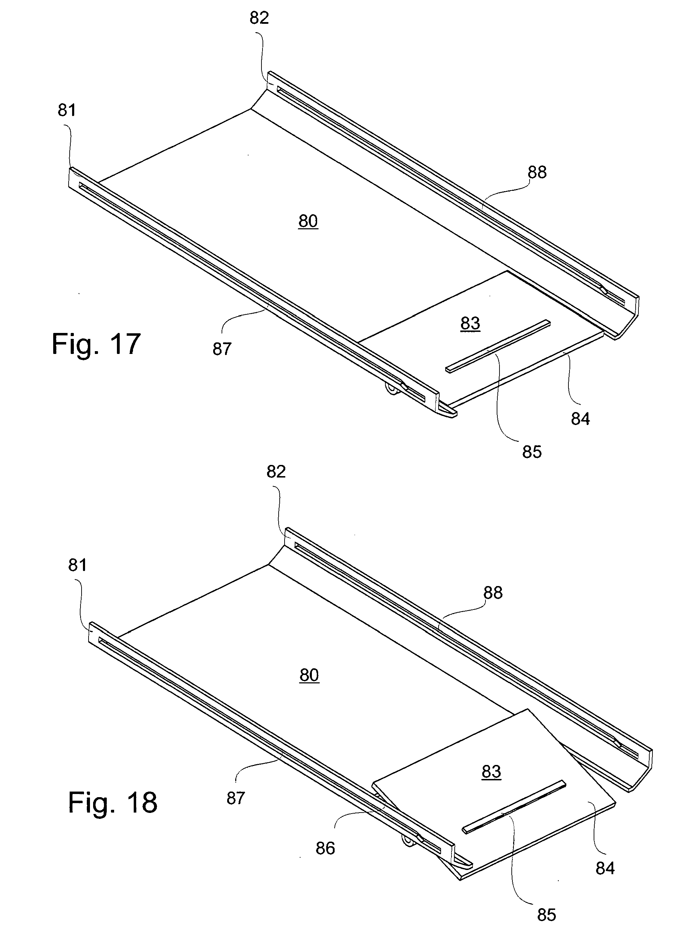

Fig. 17 shows a preferred embodiment of a goods item feeding mechanism 79 in a first feeding position, where the tilting plate 83 is flush with the plate 80. It must be understood that the edge of the tilting plate opposite its free confronting edge 84 cannot pivot downwards, but only upwards.

As seen in fig. 18 the upwards pivoting of the tilting plate 83 is adjusted so that the next goods item 66 in the feeding series on the plate 80 cannot pass into the opening 86, between the plate 80 and the tilting plate 83, that is exposed during pivoting of the tilting plate 83 when a goods item 66 is in progress of being transferred to the paternoster elevator. The tilting plate 83 has a stop list 85 to keep the goods item 66 that is next to be fed to the paternoster elevator by the goods item feeding mechanism 79 until it is the turn of this next goods item to be fed to the paternoster elevator 49.

The paternoster elevator 49 can further be moved up from and down into a conditioning housing using any suitable hoisting or lifting mechanism, including the mechanisms previously described.

The cover and/or the paternoster elevator can in some embodiments be moved co-axially with the conditioning housing to gain access to the goods items inside the elevator and subsequently hiding the goods items into the ground again after a shelf has been unloaded.

Modifications and combinations of the above principles and designs are foreseen within the scope of the present invention.

For example the arrangements according to the present invention are described above illustrating exemplary embodiments used for cooling goods items, such as food and beverages. This exemplary use as a refrigerator is not intended to limit the scope of the present invention and the arrangement can for example also be used as convenient pit storage for frost protection of goods items, such as foodstuff, in very cold seasons.

The arrangement for conditioning the temperature of goods items can be designed as a tubular unit having e.g. cylindrical or polygonal cross-section and be made in any suitable size.

Within the scope of the present invention any design of shelf, receptacle, plate, compartment, container, etc., that can hold or support goods items and otherwise comply with the provisions stated in the above description can be integrated or implemented in the conditioning arrangements according to the present invention.

## Claims

1. An arrangement for conditioning the temperature of goods items without an external energy source being required for the conditioning process, said arrangement comprising
- a conditioning housing (1,1') having a circumferential wall and serving for at least temporarily storing the goods items (66), which conditioning housing (1,1') is placed in the ground (2) and has an access opening (3) at or above the ground (2) level,
- an elevator (4;9;9';30) for carrying the goods items (66) between an upper position outside the conditioning housing (1,1') and a lower position inside the conditioning housing (1,1'), and
- a driving means (18,54) for driving the elevator (4;9;9';30;49),
**characterized in that** the elevator (30,49) is a paternoster elevator, comprising an endless conveyor belt (50) or an endless conveyor chain (31) orbiting in an upright plane around an upper sprocket (32) or upper roller (52) and a lower sprocket (33) or a lower roller (53), and at least one shelf (51) secured to the endless conveyor belt (50) or an endless conveyor chain (31), which at least one shelf (51) does not extend into the gap between descending legs (31a,50a) and ascending legs (31b,50b) of the endless conveyor belt (50) or endless conveyor chain (31), wherein the arrangement has a goods item collection trough (58) below the lower sprocket (33) or roller, and wherein the at least one shelf (51) has a first side (56), onto which the goods items (66) rest during downwards transport, and a second side (57), onto which the goods items (66) rest during upwards transport.

2. An arrangement according to claim 1, **characterised in that** the at least one shelf (51) or container (34) is secured to the endless conveyor belt or the endless conveyor chain (31) and faces away from the endless conveyor belt (50) or endless conveyor chain (31) in the direction towards the circumferential wall of the conditioning housing (1,1').

3. An arrangement according to any of the preceding claims 1 or 2, **characterised in that** the circumferential wall of the conditioning housing (1,1') serves as a guide surface for goods items (66) on the at least one shelf (51).

4. An arrangement according to any of the preceding claims 1 - 3, **characterised in that** a first side (56) of the at least one shelf (51) has means for retaining a goods item (66) on the at least one shelf (51) during descending.

5. An arrangement according to any of the preceding claims 1 - 4, **characterised in that** the paternoster elevator (49) comprises a slide (55) arranged to be pivoted by the at least one shelf (51) hitting the slide (55).

6. An arrangement according to any of the preceding claims 1 - 5, **characterised in that** a free edge of the at least one shelf (51) has means for actuating pivoting of the slide (55).

7. An arrangement according to claim 6, **characterised in that** the slide (55) has a turned over free end (62) opposite a pivot end (63) that engages the free edge of an ascending shelf (51).

8. An arrangement according to any of the preceding claims 1 - 7, **characterised in that** arrangement has a goods item collection trough (58) below the lower sprocket (33) or roller, wherein a concavity of the goods item collection trough (58) has an internal outline congruent with the curve which the free edge of a shelf (51) sweeps during transport of goods items (66).

9. An arrangement according to any of the preceding claims 1 - 8, **characterised in that** the arrangement comprises a roof or cover (13;13';22;40) arranged for closing the access opening (3) to the conditioning housing (1,1').

10. An arrangement according to any of the preceding claims 1 - 9, **characterised in that** the conditioning housing (1,1') has a means for moving the entire elevator (30,49) vertically.

11. An arrangement according to any of the preceding claims 1 - 10, **characterised in that** the driving means includes a handle (54) for manually rotating the upper sprocket or upper roller (52) to put the endless belt (50) or the endless conveyor chain (31) in orbit, optionally the driving means includes an electric motor (18).

12. An arrangement according to any of the preceding claims 1 - 11, **characterised in that** the arrangement comprises a goods items feeding mechanism (79).

13. A method of operating an arrangement according to any of the preceding claims 1 - 12, comprising the steps of
- loading the at least one shelf (51) with goods items (66) during orbiting the endless conveyor belt (50) or the endless conveyor chain (31) in an upright plane around an upper sprocket (32) or upper roller (52) and a lower sprocket (33) or a lower roller (53),
- allowing the goods items (66) to conditioning, and
- unloading the goods items (66) from the at least one shelf (51) by activating the driving means (18,54) and orbiting the endless conveyor belt (50) or the endless conveyor chain (31).

14. Use of the arrangement according to any of the preceding claims 1 - 12 for cooling canned beverages (66).

## Patentansprüche

1. Eine Anordnung zum Konditionieren der Temperatur von Gütern, ohne dass eine externe Energiequelle für den Konditionierungsvorgang erforderlich ist, wobei die Anordnung aufweist
- ein Konditionierungsgehäuse (1, 1') mit einer Umfangswandlung, die zum wenigstens zeitweiligen Lagern der Güter (66) dient, wobei das Konditionierungsgehäuse (1, 1') auf dem Boden (2) angeordnet ist, und eine Zugangsöffnung (3) an oder oberhalb der Ebene des Bodens (2) hat,
- einen Elevator (4; 9; 9'; 30) zum Verbringen der Güter (66) zwischen einer oberen Position außerhalb des Konditionierungsgehäuses (1, 1') und einer unteren Position im Inneren des Konditionierungsgehäuses (1, 1'), und
- ein Antriebsmittel (18, 54) zum Antreiben des Elevators (4; 9; 9'; 30; 49),
**dadurch gekennzeichnet, dass** der Elevator (30, 49) ein Paternoster-Elevator ist mit
einem endlosen Fördergurt (50) oder einer endlosen Förderkette (31), die in einer aufrechten Ebene um ein oberes Zahnrad (32) oder einer oberen Walze (52) und einem unteren Zahnrad (33) oder einer unteren Walze (43) umläuft und wenigstens einer Schale (51), die an dem endlosen Fördergurt (59) oder einer endlosen Förderkette (31) gesichert ist, wobei die wenigstens eine Schale (51) sich nicht in den Spalt zwischen den absteigenden Schenkeln (31a, 50a) und den aufsteigenden Schenkeln (31b, 50b) des Endlosfördergurts (50) oder der Endlosförderkette (31) erstreckt, wobei die Anordnung einen Gütersammeltrog (58) unterhalb des unteren Zahnrads (33) oder der unteren Walze hat, und wobei die wenigstens eine Schale (51) eine erste Seite (56) hat, auf der die Güter (66) während des Abwärtstransports ruhen und eine zweite Seite (57) hat, auf der die Güte (66) während des Aufwärtstransports ruhen.

2. Eine Anordnung nach Anspruch 1, **dadurch gekennzeichnet, dass** die wenigstens eine Schale (51) oder der Behälter (34) an dem Endlosfördergurt oder der Endlosförderkette (31) gesichert sind und weg von dem Endlosfördergurt (50) oder der Endlosförderkette (31) in der Richtung hin zu der Umfangswandung des Konditionierungsgehäuses (1, 1') weist.

3. Eine Anordnung nach einem der vorangehenden Ansprüche 1 oder 2, **dadurch gekennzeichnet, dass** die Umfangswandung des Konditionierungsgehäuses (1, 1') als eine Führungsfläche für Güter (66) auf der wenigstens einen Schale (51) dient.

4. Eine Anordnung nach einem der vorangehenden Ansprüche 1 - 3, **dadurch gekennzeichnet, dass** die erste Seite (56) der wenigstens einen Schale (51) ein Mittel zum Rückhalten eines Guts (66) auf der wenigstens einen Schale (51) während des Abwärtstransports hat.

5. Eine Anordnung nach einem der vorangehenden Ansprüche 1 - 4, **dadurch gekennzeichnet, dass** der Paternoster-Elevator (49) einen Schlitten (55) hat, der zum Verschwenken von der gegen den Schlitten (55) anstoßenden wenigstens eine Schale (51) angeordnet ist.

6. Eine Anordnung nach einem der vorangehenden Ansprüche 1 - 5, **dadurch gekennzeichnet, dass** eine freie Kante der wenigstens einen Schale (51) ein Mittel zum Bewirken eines Verschwenkens des Schlittens (55) hat.

7. Eine Anordnung nach Anspruch 6, **dadurch gekennzeichnet, dass** der Schlitten (55) einen gegenüberliegend zu einem Schwenkende (62) umgeschlagenes freies Ende (63) hat, das den freien Rand der sich abwärts bewegenden Schale (51) berührt.

8. Eine Anordnung nach einem der vorangehenden Ansprüche 1 - 7, **dadurch gekennzeichnet, dass** die Anordnung einen Gutsammeltrog (58) unterhalb des unteren Zahnrades oder der Walze hat, wobei eine Höhlung des Gütersammeltrogs (58) einen inneren Umriss hat, der mit der Krümmung, mit der sich das freie Ende einer Schale (51), die während des Transports des Guts (66) kippt, übereinstimmend ist.

9. Eine Anordnung nach einem der vorangehenden Ansprüche 1 - 8, **dadurch gekennzeichnet, dass** die Anordnung ein Dach oder eine Abdeckung (13; 13'; 22; 40) hat, die zum Verschließen der Zugangsöffnung (3) des Konditionierungsgehäuses (1, 1') eingerichtet ist.

10. Eine Anordnung nach einem der vorangehenden Ansprüche 1 - 9, **dadurch gekennzeichnet, dass** das Konditionierungsgehäuse (1, 1') ein Mittel zum vertikalen Bewegen des ganzen Elevators (30, 49) hat.

11. Eine Anordnung nach einem der vorangehenden Ansprüche 1 - 10, **dadurch gekennzeichnet, dass** das Antriebsmittel einen Griff (94) zum manuellen Drehen des oberen Zahnrads oder der oberen Walze (52) hat zum Einbringen des Endlosgurts (50) oder der endlosen Förderkette (51) in die Kreisbahn hat, optional weist das Antriebsmittel einen Elektromotor (18) auf.

12. Eine Anordnung nach einem der vorangehenden Ansprüche 1 - 11, **dadurch gekennzeichnet, dass** die Anordnung einen Speisemechanismus (79) für die Güter aufweist.

13. Ein Verfahren zum Betreiben einer Anordnung nach einem der vorangehenden Ansprüche 1 - 12, mit den folgenden Schritten:
- Beladen der wenigstens einen Schale (51) mit Gütern (66) während des Umlaufens des endlosen Fördergurts (50) oder der endlosen Förderkette (31) in einer aufrechten Ebene um ein oberes Zahnrad (32) oder um eine obere Walze 852) und um ein unteres Zahnrad (33) oder einer unteren Walze (53),
- Erlauben des Konditionierens des Guts (66), und
- Entnehmen der Güter (66) von der wenigstens einen Schale (51) durch Aktivieren des Antriebsmittels (18, 54) und Umlaufenlassen des endlosen Fördergurts (50) oder der endlosen Förderkette (31).

14. Verwendung der Anordnung nach einem der vorangehenden Ansprüche 1 - 12 zum Kühlen von Dosen (66).

## Revendications

1. Arrangement pour le conditionnement de la température d'articles de marchandises en l'absence d'une source d'énergie externe requise pour le processus de conditionnement, ledit arrangement comprenant :
- une chambre de conditionnement (1, 1') possédant une paroi circonférentielle et servant à l'entreposage au moins temporaire des articles de marchandises (66), ladite chambre de conditionnement (1, 1') étant placée dans le sol (2) et possédant une ouverture d'accès (3) au niveau du sol (2) ou au-dessus de ce niveau ;
- un élévateur (4 ; 9 ; 9' ; 30) pour transporter les articles de marchandises (66) entre une position supérieure à l'extérieur de la chambre de conditionnement (1, 1') et une position inférieure à l'intérieur de la chambre de conditionnement (1, 1') ; et
- un moyen d'entraînement (18, 54) pour entraîner l'élévateur (4 ; 9 ; 9' ; 30 ; 49),
**caractérisé en ce que** l'élévateur (30, 49) est un élévateur de type pater-noster, comprenant une courroie transporteuse sans fin (50) ou une chaîne transporteuse sans fin (31) orbitant dans un plan vertical autour d'un pignon supérieur (32) ou d'un rouleau supérieur (52) et d'un pignon inférieur (33) ou d'un rouleau inférieur (53), et au moins une étagère (51) fixée à la courroie transporteuse sans fin (50) ou à une chaîne transporteuse sans fin (31), ladite au moins une étagère (51) ne s'étendant pas jusque dans l'espace libre ménagé entre les branches descendantes (31a, 50a,) et les branches ascendantes (31b, 50b) de la courroie transporteuse sans fin (50) ou de la chaîne transporteuse sans fin (31), dans lequel l'arrangement possède une cuvette de récolte d'articles de marchandises (58) en dessous du pignon inférieur (33) ou du rouleau, et dans lequel ladite au moins une étagère (51) possède un premier côté (56) sur lequel s'appuient les articles de marchandises (66) au cours du transport vers le bas et un deuxième côté (57) sur lequel s'appuient les articles de marchandises (66) au cours du transport vers le haut.

2. Arrangement selon la revendication 1, **caractérisé en ce que** ladite au moins une étagère (51) ou ledit au moins un récipient (34) est fixé à la courroie transporteuse sans fin ou à la chaîne transporteuse sans fin (31) et se détourne de la courroie transporteuse sans fin (50) ou de la chaîne transporteuse sans fin (31) en étant orientée dans la direction de la paroi circonférentielle de la chambre de conditionnement (1, 1').

3. Arrangement selon l'une quelconque des revendications précédentes 1 ou 2, **caractérisé en ce que** la paroi circonférentielle de la chambre de conditionnement (1,1') sert de surface de guidage pour les articles de marchandises (66) sur ladite au moins une étagère (51).

4. Arrangement selon l'une quelconque des revendications précédentes 1 à 3, **caractérisé en ce qu'**un premier côté (56) de ladite au moins une étagère (51) possède des moyens pour retenir un article de marchandise (66) sur ladite au moins une étagère (51) lors de la descente.

5. Arrangement selon l'une quelconque des revendications précédentes 1 à 4, **caractérisé en ce que** l'élévateur de type pater-noster (49) comprend une glissière (55) arrangée pour pivoter lorsque ladite au moins une étagère (51) heurte la glissière (55).

6. Arrangement selon l'une quelconque des revendications précédentes 1 à 5, **caractérisé en ce qu'**un bord libre de ladite au moins une étagère (51) possède des moyens pour actionner le pivotement de la glissière (55).

7. Arrangement selon la revendication 6, **caractérisé en ce que** la glissière (55) possède une extrémité libre retournée (62) à l'opposé de l'extrémité pivotante (63) qui entre en contact avec le bord libre d'une étagère montante (51).

8. Arrangement selon l'une quelconque des revendications précédentes 1 à 7, **caractérisé en ce que** l'arrangement possède une cuvette de récolte d'articles de marchandises (58) en dessous du pignon inférieur (33) ou du rouleau inférieur, la concavité de la cuvette de récolte d'articles de marchandises (58) possédant un contour interne dont la configuration épouse celle de la courbe balayée par l'extrémité libre d'une étagère (51) au cours du transport d'articles de marchandises (66).

9. Arrangement selon l'une quelconque des revendications précédentes 1 à 8, **caractérisé en ce que** l'arrangement comprend un toit ou un recouvrement (13 ; 13' ; 22 ; 40) conçu pour fermer l'ouverture d'accès (3) à la chambre de conditionnement (1, 1').

10. Arrangement selon l'une quelconque des revendications précédentes 1 à 9, **caractérisé en ce que** la chambre de conditionnement (1, 1') possède un moyen pour déplacer l'élévateur dans son ensemble (30, 49) à la verticale.

11. Arrangement selon l'une quelconque des revendications précédentes 1 à 10, **caractérisé en ce que** le moyen d'entraînement englobe une poignée (54) pour faire tourner manuellement le pignon supérieur ou le rouleau supérieur (52) afin de mettre la courroie sans fin (50) ou la chaîne transporteuse sans fin (31) en orbite, le moyen d'entraînement englobant de manière facultative un moteur électrique (18).

12. Arrangement selon l'une quelconque des revendications précédentes 1 à 11, **caractérisé en ce que** l'arrangement comprend un mécanisme d'alimentation d'articles de marchandises (79).

13. Procédé de mise en oeuvre d'un arrangement selon l'une quelconque des revendications précédentes 1 à 12, comprenant les étapes consistant à :
- charger ladite au moins une étagère (51) avec des articles de marchandises (66) lors de la mise en orbite de la courroie transporteuse sans fin (50) ou de la chaîne transporteuse sans fin (31) dans un plan vertical autour d'un pignon supérieur (32) ou d'un rouleau supérieur (52) et d'un pignon inférieur (33) ou d'un rouleau inférieur (53) ;
- laisser se dérouler le conditionnement des articles de marchandises (66) ; et
- décharger les articles de marchandises (66) à partir de ladite au moins une étagère (51) en activant le moyen d'entraînement (18, 54) et en mettant sur orbite la courroie transporteuse sans fin (50) ou la chaîne transporteuse sans fin (31).

14. Utilisation de l'arrangement selon l'une quelconque des revendications précédentes 1 à 12, pour refroidir des boissons en conserve (66).
